# EUROPEAN PATENT SPECIFICATION

(11) **EP 1 910 247 B1**
(45) Date of publication and mention of the grant of the patent: **23.09.2015**
(21) Application number: 06765133.1
(22) Date of filing: 28.07.2006
(51) Int. Cl.: C04B 35/80, C04B 35/573, F16D 69/02

(54) **IMPROVEMENTS IN OR RELATING TO BRAKE AND CLUTCH DISCS**
VERBESSERUNGEN BEI ODER BEZÜGLICH BREMS-UND KUPPLUNGSSCHEIBEN
AMÉLIORATIONS CONCERNANT DES DISQUES DE FREIN ET D'EMBRAYAGE

(30) Priority: 29.07.2005 GB 0515647
(43) Date of publication of application: 16.04.2008
(73) Proprietor: Surface Transforms Plc, Ellesmere Port, Cheshire CH66 1ST (GB)
(72) Inventor: FARIA, Julio, Joseph, Kelsall, Cheshire CW6 ORF (GB); JOHNSON, Kevin, Preston, Lancashire PR25 1UB (GB); GOULD, Geoffrey, Leamington Spa, Warwickshire CV32 6JW (GB)
(74) Representative: Hall, Matthew Benjamin
(86) International application number: PCT/GB2006/002815
(87) International publication number: WO 2007/012865

(56) References cited:
- EP-A- 0 300 756
- US-A1- 2004 127 600
- US-A1- 2005 011 706
- US-B1- 6 221 475

## Description

This invention relates to a method for manufacturing brake and clutch discs for motorised land vehicles and to novel brake and clutch discs which are obtainable thereby. More particularly it concerns brake and clutch discs comprising carbon fibre-reinforced ceramic material such as may be obtained by using chemical vapour infiltration to deposit a carbon matrix around the reinforcing carbon fibres and thereafter impregnating the carbon matrix with molten silicon.

Much interest has been shown in the use of carbon fibre-reinforced ceramic brake discs, in particular siliconised carbon-carbon fibre composites, because of their high strength, their ability to maintain excellent physical and frictional properties at high operating temperatures, and their low weight compared to conventional metal discs, for example permitting a weight reduction of 50-60% relative to a standard cast iron disc. Such weight reduction is important in improving performance and fuel economy; by reducing the unsprung weight of a vehicle it may also improve the road holding, handling and comfort of the vehicle. Motor vehicles may likewise benefit from the use of such low weight high friction materials in clutch discs.

Existing commercially available siliconised carbon fibre-reinforced ceramic brake discs are all prepared by a "resin char" method in which the reinforcing carbon fibres and a carbonisable resin (e.g. pitch or a phenolic resin) are hot moulded together to approximately the desired shape, and the resulting moulded preform is carbonised (e.g. by heating to *ca.* 1000°C under an inert atmosphere or *in vacuo*), and optionally graphitised (e.g. by heating to ≥ 2000°C). The resulting green bodies may then be shaped and/or joined together as appropriate, and are siliconised, for example by at least partial immersion in a bath of molten silicon or by a hot isostatic pressure treatment involving encapsulation with excess silicon in an evacuated container which is then subjected to high temperature and isostatic pressure.

Resin char procedures have the advantage of being relatively simple to operate, but do suffer a number of disadvantages. Thus the mould is normally filled with randomly oriented short carbon fibres, typically having an average length of less than 30 mm, more commonly less than 25 mm. The fibres may, for example, be chopped from matchstick-like aggregates of carbon fibres which have been preimpregnated with resin; alternatively dry fibres chopped from a carbon fibre fabric such as a felt may be used, in which case resin is separately injected into the mould. It will be appreciated that the random orientation of the short carbon fibres necessarily limits the reproducibility of products obtained using resin char procedures.

Another disadvantage is that the resin tends to shrink away from and expose some of the carbon fibre content during carbonisation. The integrity of such exposed fibres may be damaged by reaction with silicon in the subsequent siliconisation step.

The need to use a mould also puts practical limitations on the procedure, since any desired changes to the shape of the product will necessitate potentially expensive retooling.

It is known in the art that chemical vapour infiltration may be used as an alternative to resin char processing in order to form carbon-carbon fibre composites, although it is generally considered to be unduly complicated and too expensive for more than highly specialised uses such as the manufacture of carbon-carbon fibre composite brake discs for aircraft. The manufacture of such discs typically involves generation of an initial carbon fibre preform which is then subjected to a sequence of chemical vapour infiltration steps, for example using methane as the source of pyrolitic carbon. A sequence of steps is needed because the depositing carbon tends to block the pores between the reinforcing fibres, thereby halting carbon uptake. Initial saturation typically occurs after 10-14 days; by this time the preform may have a density of the order of 1.4-1.5 g/cm³ and will not yet have sufficient strength or integrity for use as a brake disc. It is therefore normal practice to remove the partially densified preform from the furnace and machine its surfaces in order to reopen the blocked pores, whereafter chemical vapour infiltration may be resumed. At least one further machining step and a third chemical vapour infiltration stage are normally required in order to obtain a disc with an acceptable density of around 1.8-1.9 g/cm³; the total processing time is typically of the order of 150 days. U.S. Patent No. 6,878,331 confirms that chemical vapour infiltration generally has to be repeated three to five times before the desired density is achieved.

Discs obtained in this way are not siliconised, and function well as aircraft brakes. They are, however, inappropriate for use in land vehicles, since they exhibit poor frictional properties at ambient temperatures and so cannot be used to provide occasional light braking.

It has hitherto been thought that even chemical vapour infiltration-generated discs which are intended to be siliconised require at least two stages of infiltration to be performed. Thus it is noted in U.S. Patent No. 6,030,913 that if chemical vapour infiltration is used only once per process, then microcracks remain in the deposited pyrocarbon layer and permit unwanted penetration of silicon during siliconisation. It is observed that multistage infiltration to overcome this problem is very costly.

Whilst U.S. Patent No. 6,110,535 describes a technique for delivering a molten silicon composition into porous substrates of carbon composite material which may be obtained by densification using chemical vapour infiltration, this is normally the first step of a two stage densification process and is followed by a resin char densification so as to form grains of coke in the pores of the residual pore space remaining after the chemical vapour infiltration.

US-81-6221475 discloses a further example of a multi-stage densification process, used for land vehicle brake discs.

The present invention is based on the unexpected finding that highly effective siliconised carbon-carbon fibre composite brake and clutch discs may in fact be manufactured by siliconisation of incompletely densified preforms which have undergone only a single chemical vapour infiltration densification step. It is therefore possible to reduce the chemical vapour infiltration processing time from around 150 days to as little as, for example, seven days or less, greatly reducing process operating costs and permitting the manufacture of brake and clutch discs with highly advantageous properties at costs comparable to those of procedures using resin char processing. The reduced operating costs make the products commercially viable for application to motorised land vehicles, including both road going and racing cars and motorbikes, as well as vans, lorries, buses and coaches, military vehicles and railway engines, coaches and trucks.

Thus according to one aspect of the invention there is provided a method for the manufacture of a carbon fibre-reinforced ceramic brake or clutch disc for a motorised land vehicle, which method comprises preparing a carbon fibre preform having dimensions which substantially correspond to those of the desired disc, densifying said preform with carbon using only a single stage chemical vapour infiltration process, and siliconising said densified preform by reaction with molten silicon.

A major advantage of the process of the invention is that, by avoiding the use of moulds, minimal constraints are placed on the shape of the carbon fibre preform, which may be varied as required without the need for major retooling, thereby rendering the manufacturing process highly versatile.

There are similarly no constrains on the length of the carbon fibres which may be used. The preforms may therefore advantageously consist essentially of long fibres, for example having an average length of at least 50 mm, preferably at least 75, 100, 125 or 150 mm, since long fibres enhance the strength and integrity of the product. Without wishing to be bound by theoretical considerations, it may be that the presence of long fibres is beneficial in ensuring that the products remain free from structural defects such as microcracks in contrast to the single stage chemical vapour infiltration-generated prior art products discussed earlier.

It is particularly preferred that the reinforcing carbon fibres are essentially continuous, i.e. that the average fibre length is equal to or exceeds the radial distance between the inner and outer peripheries of the disc. A particularly simple method of preparing such a continuous fibre preform is to cut it from a continuous sheet or cylinder of carbon fibre fabric, for example a woven fabric or a non-woven felt comprising alternating layers of carbon fibres laid at different angles, e.g. 0° and 90°.

The chemical vapour infiltration step may be conducted in *per se* known manner in an appropriate furnace, which is preferably highly lagged to ensure that heating costs are kept as low as possible. Low molecular weight hydrocarbons such as methane, propane or butane or mixtures of any of these gases may, for example, be used as pyrolytic carbon source and may, for example, be applied in conjunction with a carrier gas such as nitrogen. For cost reasons use of methane may be preferred. The process may, for example, be operated at a temperature of about 1100°C, e.g. 1100±50°C, for a period of up to 21 days, preferably 7-14 days, during which time the density of the preform will typically increase from an initial 0.3-0.6 g/cm³ to a value in the range 1.0-1.5 g/cm³.

It will be appreciated that the morphology of the carbon matrix laid down during chemical vapour infiltration can be varied by appropriate control of the operating temperature and pressure, in a manner which is not possible when using a resin char process. The reactivity of the matrix may be modified in this way, permitting "fine tuning" of the relative carbon, silicon and silicon carbide contents of the siliconised matrix in order to optimise the structural and frictional properties of the end product.

If desired the partially densified preform may be graphitised prior to siliconisation, for example by heat treatment at *ca.* 2000°C or above, e.g. up to 2400°C, under non-oxidising conditions, e.g. under an inert gas such as argon or *in vacuo,* for example for a period of about 96 hours at peak temperature.

Siliconisation may be effected in any appropriate manner such as is known in the art. For ease of operability a dip process in which the optionally graphitised partially densified preform is at least partially immersed in a bath of molten silicon or a hot isostatic pressing procedure may be preferred.

The product may be machined to its desired final dimensions either before or after siliconisation. The former option may be preferred since the presiliconisation intermediate product is less hard and therefore more readily machinable than the siliconised end product.

Carbon fibre-reinforced ceramic brake and clutch discs obtainable in accordance with the method of the invention are new and useful products. Unlike products obtained using conventional resin char processing, the carbon matrix of the present products exhibits particularly high levels of adherence to the reinforcing fibres. The fibres are therefore well protected against unwanted interaction with silicon during siliconisation, and the products exhibit substantially enhanced strength and integrity compared to those of the prior art.

Whereas the carbon matrix in resin char products of the prior art predominantly comprises amorphous glassy carbon, the matrix carbon content of the present products is comparatively more ordered, generally being in an isotropic, rough laminar or smooth laminar form. This is advantageous in that it permits more even and controlled interactions with silicon during siliconisation, permitting the manufacture of more uniform and reproducible products.

Long fibre-containing products are a particularly advantageous embodiment of the invention by virtue of the strength and integrity imparted by such reinforcement. Thus according to a further feature of the invention there is provided a carbon fibre-reinforced ceramic brake or clutch disc for a motorised land vehicle, said disc consisting essentially of a network of reinforcing carbon fibres which has an average fibre length of at least 50 mm, and which is substantially completely encapsulated within a siliconised mixture of carbon in isotropic, rough laminar or smooth laminar form.

Once again it is preferred in this embodiment of the invention that the average length of the reinforcing fires is equal to or exceeds the radial distance between the inner and outer peripheries of the disc.

Preferred products of this embodiment of the invention may, for example, be characterised by relative carbon (combined matrix and reinforcing fibres):silicon carbide:free silicon contents in the range 50-65%:30-45%:1-10%, more preferably 55-60%:35-40%:2-6%, all percentages being by weight.

## Claims

1. A method for the manufacture of a carbon fibre-reinforced ceramic brake or clutch disc for a motorised land vehicle, which method comprises preparing a carbon fibre preform having dimensions which substantially correspond to those of the desired disc, densifying said preform with carbon using only a single stage chemical vapour infiltration process, and siliconising said densified preform by reaction with molten silicon.

2. A method as claimed in claim 1 wherein the average length of the carbon fibres within the preform is at least 50 mm.

3. A method as claimed in claim 1 where the average length of the carbon fibres within the preform is equal to or exceeds the radial distance between the inner and outer peripheries of the disc.

4. A method as claimed in any of claims 1 to 3 wherein the preform is cut from a continuous sheet or cylinder of carbon fibre fabric.

5. A method as claimed in claim 4 wherein said continuous sheet is a nonwoven felt.

6. A method as claimed in any of claims 1 to 5 wherein the initial preform has a density of 0.3-0.6 g/cm³.

7. A method as claimed in any of claims 1 to 6 wherein the densified preform has a density of 1.0-1.5 g/cm³.

8. A method as claimed in any of claims 1 to 7 wherein the single stage chemical vapour deposition process is carried out for a total of up to 21 days.

9. A method as claimed in claim 8 wherein the said deposition process is carried out for a total of 7-14 days.

10. A method as claimed in any of claims 1 to 9 wherein the densified preform is machined to the dimensions of the desired disc prior to the reaction with molten silicon.

11. A method as claimed in any of claims 1 to 10 wherein the reaction with molten silicon is carried out by at least partially immersing the densified preform in a bath of molten silicon or by encapsulation with excess silicon in an evacuated container which is subjected to high temperature and isostatic pressure.

12. A method as claimed in any of claims 1 to 11 wherein the siliconised densified preform is machined to the dimensions of the desired disc.

## Patentansprüche

1. Verfahren zur Herstellung einer kohlenstofffaserverstärkten keramischen Brems- oder Kupplungsscheibe für ein motorisiertes Landfahrzeug, wobei das Verfahren das Vorbereiten eines Kohlenstofffaservorformlings mit Abmessungen, die im Wesentlichen jenen der angestrebten Scheibe entsprechen, Verdichten des Vorformlings mit Kohlenstoff unter Einsatz eines einstufigen chemischen Gasphaseninfiltrationsvorgangs und Einbringen von Silizium in den verdichteten Vorformling durch geschmolzenes Silizium umfasst.

2. Verfahren nach Anspruch 1, wobei die durchschnittliche Länge der Kohlenstofffasern im Vorformling wenigstens 50 mm beträgt.

3. Verfahren nach Anspruch 1, wobei die durchschnittliche Länge der Kohlenstofffasern im Vorformling gleich dem radialen Abstand zwischen dem inneren Umfang und dem äußeren Umfang der Scheibe ist oder ihn übersteigt.

4. Verfahren nach einem beliebigen der Ansprüche 1 bis 3, wobei der Vorformling aus einer fortlaufenden Bahn oder einem fortlaufenden Zylinder aus Kohlenstofffasergewebe geschnitten ist.

5. Verfahren nach Anspruch 4, wobei die fortlaufende Bahn ein nicht gewebtes Vlies ist.

6. Verfahren nach einem beliebigen der Ansprüche 1 bis 5, wobei der anfängliche Vorformling eine Dichte von 0,3-0,6 g/cm³ aufweist.

7. Verfahren nach einem beliebigen der Ansprüche 1 bis 6, wobei der verdichtete Vorformling eine Dichte von 1,0-1,5 g/cm³ aufweist.

8. Verfahren nach einem beliebigen der Ansprüche 1 bis 7, wobei der einstufige chemische Gasphasenablagerungsvorgang über insgesamt bis zu 21 Tagen ausgeführt wird.

9. Verfahren nach Anspruch 8, wobei der Ablagerungsvorgang über insgesamt 7-14 Tage ausgeführt wird.

10. Verfahren nach einem beliebigen der Ansprüche 1 bis 9, wobei der verdichtete Vorformling auf die Abmessungen der angestrebten Scheibe hin vor der Reaktion mit geschmolzenem Silizium bearbeitet wird.

11. Verfahren nach einem beliebigen der Ansprüche 1 bis 10, wobei die Reaktion mit dem geschmolzenem Silizium durch wenigstens teilweises Eintauchen des verdichteten Vorformlings in ein Bad aus geschmolzenem Silizium oder durch Einkapselung mit überschüssigem Silizium in einem evakuierten Behälter, welcher hoher Temperatur und isostatischem Druck unterworfen wird, ausgeführt wird.

12. Verfahren nach einem beliebigen der Ansprüche 1 bis 11, wobei der mit Silizium versehene, verdichtete Vorformling auf die Abmessungen der angestrebten Scheibe bearbeitet wird.

## Revendications

1. Procédé de fabrication d'un disque de frein ou d'embrayage en matière céramique renforcée de fibres de carbone pour un véhicule terrestre motorisé, lequel procédé comprend les étapes consistant à préparer une préforme de fibres de carbone ayant des dimensions qui correspondent sensiblement à celles du disque souhaité, densifier ladite préforme avec du carbone en utilisant uniquement un procédé d'infiltration de vapeur chimique mono-étage et siliconer ladite préforme densifiée par réaction avec de la silicone fondue.

2. Procédé selon la revendication 1, dans lequel la longueur moyenne des fibres de carbone dans la préforme est d'au moins 50 mm.

3. Procédé selon la revendication 1, dans lequel la longueur moyenne des fibres de carbone dans la préforme est égale ou supérieure à la distance radiale entre les périphéries interne et externe du disque.

4. Procédé selon l'une quelconque des revendications 1 à 3, dans lequel la préforme est découpée dans une feuille continue ou un cylindre de tissu de fibres de carbone.

5. Procédé selon la revendication 4, dans lequel ladite feuille continue est un feutre non tissé.

6. Procédé selon l'une quelconque des revendications 1 à 5, dans lequel la préforme initiale a une masse volumique de 0,3 à 0,6 g/cm³.

7. Procédé selon l'une quelconque des revendications 1 à 6, dans lequel la préforme densifiée a une masse volumique de 1,0 à 1,5 g/cm³.

8. Procédé selon l'une quelconque des revendications 1 à 7, dans lequel le procédé de dépôt en vapeur chimique mono-étage est effectué sur une période totale allant jusqu'à 21 jours.

9. Procédé selon la revendication 8, dans lequel ledit procédé de dépôt est effectué sur une période totale de 7 à 14 jours.

10. Procédé selon l'une quelconque des revendications 1 à 9, dans lequel la préforme densifiée est usinée aux dimensions du disque souhaité avant la réaction avec la silicone fondue.

11. Procédé selon l'une quelconque des revendications 1 à 10, dans lequel la réaction avec la silicone fondue est effectuée en immergeant au moins en partie la préforme densifiée dans un bain de silicone fondue ou par encapsulation avec de la silicone en excès dans un récipient sous vide qui est soumis à une température élevée et à une pression isostatique.

12. Procédé selon l'une quelconque des revendications 1 à 11, dans lequel la préforme densifiée siliconée est usinée aux dimensions du disque souhaité.
